# EUROPEAN PATENT APPLICATION

(11) **EP 4 272 560 A1**
(43) Date of publication of application: **08.11.2023**
(21) Application number: 22171900.8
(22) Date of filing: 05.05.2022
(51) Int. Cl.: A22C 9/00, A22C 17/00

(54) **INJECTION APPARATUS WITH LATERAL DRIVE ASSEMBLY**

(71) Applicant: Günther Maschinenbau GmbH, 64859 Eppertshausen (DE)
(72) Inventor:
(74) Representative: Eisenführ Speiser

(57) **Abstract**

The present invention relates to an injection apparatus (I) for injecting an injectate, like brine, into a food product. The injection apparatus (I) comprises an injection tunnel (IT), a conveyor module (CM) for conveying the food product to be treated through the injection tunnel (IT) in a conveying direction (CD), wherein the conveyor module (CM) is at least approximately horizontally arranged in the injection tunnel (IT), an injector module (IM) for injecting the injectate into the food product, wherein the injector module (IM) is arranged above the conveyor module (CM), and a drive assembly (DA) for reversibly driving the injector module (IM) in vertical direction. In the injection apparatus (I), the drive assembly (DA) includes a single drive device (410) arranged laterally to the injection tunnel (IT).

## Description

The present invention relates to an injection apparatus for injecting an injectate, like brine, into a food product. The injection apparatus comprises an injection tunnel, a conveyor module for conveying the food product to be treated through the injection apparatus, in particular through the injection tunnel, in a conveying direction, wherein the conveyor module is at least approximately horizontally arranged in the injection tunnel, an injector module for injecting the injectate into the food product wherein the injector module is arranged above the conveyor module, and a drive assembly for reversibly driving the injector module in vertical direction.

In practice, injector apparatuses for injecting an injectate, like brine, into a food product, like pieces of meat, fish, poultry or dairy products, are known, which include a conveyor module for conveying the food product to be treated through the injector apparatus, and an injector head having a plurality of injection needles that may penetrate the food product in order to deliver an injectate into the food product. The injector head of these known apparatuses is reversibly movable towards the food product by a respective drive assembly.

From DE patent application 43 12 946, an apparatus for injecting brine into pieces of meat is known, which includes a conveyor for the pieces of meat to be treated, an injector head arranged above the conveyor, a drive device for driving the conveyor, and a pump for feeding brine from a supply of brine to the injector head. The conveyor, the conveyor drive device, the injector head and the brine pump are arranged in a common housing the upper end of which is closed by a coverage. The conveyor drive device and the brine pump are provided below the conveyor.

An apparatus for injecting brine into meat bodies, disclosed in US patent 3,919,931, includes an endless conveyor for conveying the meat bodies. Above the conveyor, a crosshead carrying a plurality of hollow needles is arranged, as well as a drive device including a pivot drive for reversibly moving the crosshead towards the meat bodies for injecting brine into said meat bodies.

With these known injection apparatuses, it is possible that the pieces of meat become contaminated during treatment, e.g. due to debris or wear from drive elements located above the conveyor module. Furthermore, excess brine exciting the treated pieces of food and collected for reuse, may be affected by debris or heat from the drive components. The removal of contaminants may lead to unnecessary downtimes of the injection apparatus. Moreover, the need to replace the unusable brine or the unsaleability of the products treated with the unusable brine can significantly increase the production cost per piece of food.

In addition to safe and cost efficient operation of an injection apparatus, another important factor in the decision to invest in such an injection apparatus is that maintenance and cleaning work can be carried out easily and, above all, quickly. At the same time, it must be ensured that the physical burden on the person carrying out the maintenance and/or repair is as low as possible.

Thus, it is an object of the present invention to overcome the above mentioned drawbacks and to provide an injection apparatus which allows a cost-effective operation for the processing of the food pieces to be treated.

According to the present invention, there is provided an injection apparatus for injecting an injectate, like brine, into a food product. The injector apparatus comprising an injection tunnel, a conveyor module for conveying the food product to be treated through the injection tunnel in a conveying direction, wherein the conveyor module is at least approximately horizontally arranged in the injection tunnel, an injector module for injecting the injectate into the food product, wherein the injector module is arranged above the conveyor module, and a drive assembly for reversibly driving the injector module in vertical direction. In the inventive injector apparatus, the drive assembly includes a single drive device arranged laterally to the injection tunnel.

The provision of a single drive device laterally to the injection tunnel prevents the food products to be treated from being contaminated with debris or wear caused by said single drive device. Thereby, production losses may be prevented. Moreover, heat, generated by said single drive device, is deflected from the food products to be treated by the injection tunnel, and may not affect the food products or brine escaping from said food products.

Since the conveyor module arranged in the injection tunnel is arranged at such a vertical height that allows food pieces to be treated to be placed easily, the lateral arrangement of the drive device next to the injection tunnel facilitates the access of an operator to this drive assembly compared to the injection devices known in the prior art. This reduces the time required for maintenance and/or cleaning work as well as the physical strain on the operator.

Also, the lateral arrangement of the drive device provided next to the injection tunnel facilitates the provision of measures to reduce the heat input into the brine, for example by additional thermal insulation means in the space provided for accommodating the drive device and/or by ventilation slots on the side facing away from the injection tunnel of a possibly existing casing for the drive device. The ventilation slots can be designed in such a way that only small quantities, if any, of cleaning liquid can penetrate into this space during a cleaning process.

The single drive device may be realized in different ways. In one embodiment, the single drive device may be realized by an electric motor, like a known asynchronous motor. Alternatively, the single drive device includes a servomotor, which, compared with a common electric motor, like an asynchronous motor, works more energy efficient and needs less assembly space.

In a preferred design of the inventive injection apparatus, the drive assembly may comprise a transmission unit for transmitting torque from the single drive device at least to the injector module wherein, preferably, the components of the transmission unit are arranged laterally and below the injection tunnel.

This specific design and particularly, the arrangement of the components of the transmission unit laterally and below the injection tunnel further prevents the food products from being contaminated with debris or wear. Furthermore, maintenance and/or repair of the transmission unit is facilitated by this.

In an advantageous embodiment of the inventive injector apparatus, the transmission unit includes two vertically arranged push rods provided laterally to the injection tunnel and guided in vertical guidances, for reversibly vertically driving the injector module, and, preferably the transmission unit includes a crankshaft arranged below the injection tunnel and having two eccentric pins coupled to the lower ends of the push rods.

Vertically arranged guidances reliably guide the injector module. Moreover, dependent on the kind of guidances, wear may be reduced, and the danger of contaminating the food products is minimized. Various kinds of guidances may be used for linearly guiding the push rods. However, it is further preferred that the linear guidances include linear ball guides, which generate low friction, whereby the amount of energy for moving the injector head and the amount of heat caused by friction may be reduced. Furthermore, a crankshaft provides a reliable transformation of the rotary motion of the drive device into a linear and reversible motion of the push rods.

In the inventive injection apparatus, the crankshaft is arranged below the injection tunnel, whereby a possible contamination of the food products by wear caused by the transmission unit may be prevented.

In the injection apparatus according the present invention, the transmission unit includes a gear unit having an input shaft coupled to the single drive device, and an output shaft extending laterally from the gear unit and being coupled to the crankshaft. This specific design of the gear unit enables an arrangement of the single drive device laterally to the injection tunnel, and at a height that allows an easier access to the drive assembly, whereby maintenance and repair of the drive assembly is simplified. Furthermore, in this specific design, the single drive device and components of the transmission unit being aligned in a direction at least approximately parallel to the injection tunnel, which enables a space saving accommodation inside the injection apparatus.

The inventive injection apparatus further includes a control unit, preferably accommodated in a control cabinet being arranged above the conveyor module. With this arrangement, intrusion of leaking fluids, like brine, into the control unit, is prevented. Accordingly, unnecessary malfunction, repair and downtime of the injector apparatus is omitted. For the same reasons, if further electric or electronic components are present in the inventive injector apparatus, also aid further components may be arranged in the control cabinet.

Push rods for reversibly vertically driving the injector module may be designed in different ways. In a preferred design, the push rods are hollow tubes, for guiding power and control lines there through from the control unit to the drive assembly. Thereby, the control lines are protected against fluid, like brine, and also against mechanical damage.

The injection apparatus according to the present invention further comprises a supporting frame having a lower supporting frame assembly and an upper supporting frame assembly being located above the lower supporting frame assembly. The provision of an upper and a lower supporting frame assembly enables a specified design of the upper and lower supporting frame in adaption to their specific functions and/or the components of the injector apparatus carried by the respective supporting frame assembly.

In a preferred design of the inventive injection apparatus, an access door is provided in the upper supporting frame for providing access at least to the drive assembly. The specific arrangement of the drive assembly and the access door enable an easy and an operator-friendly maintenance and/or repair of the drive assembly, like a simplified removal of the single drive device, or elements of the transmission unit.

For further simplifying maintenance and repair, and for simplifying the handling of the injection apparatus, like transport and setup, the lower supporting frame assembly and the upper supporting frame assembly are adapted to be separated reversibly from each other.

For separating and for reassembling the lower supporting frame assembly and the upper supporting frame assembly, respective connecting elements, like bolts and screws may be provided, which also align the lower supporting frame assembly and the upper supporting frame assembly to each other.

In the inventive injection apparatus, at least one approximately U-shaped bracket assembly is arranged in the upper supporting frame assembly, for supporting at least the injection tunnel. The at least one approximately U-shaped bracket assembly enables a defined arrangement of the injection tunnel relative to the upper supporting frame assembly, and thus, also the arrangement of further components, like the transmission unit or the single drive device relative to the injection tunnel and in a fixed relationship to each other.

In the inventive injection apparatus it is preferred that the topside of the lower supporting frame assembly is an at least approximately closed surface, whereby, in case that injectate is leaking, an intrusion of injectate into componets or units arranged in the lower supporting frame assembly, may be prevented.

Alternatively the topside of the lower supporting frame assembly is provided with openings. In case that injectate is leaking, the leakage may rapidly be recognized. These openings may be arranged at specific positions, such that an intrusion of leaking injectate into components arranged in the lower supporting frame assembly is prevented.

In a further preferred design of the inventive injection apparatus, the lower supporting frame assembly defines a move-in space. Such a move-in space enable the accommodation of further components of the injection apparatus inside the lower supporting frame. Such components that not necessarily need to be arranged in the upper supporting frame, may be designed to be reversibly accommodated in the lower supporting frame, and particularly, to be reversibly removed or disassembled from the injection apparatus.

The injection apparatus according to the present invention further comprises a feed pump unit for feeding injectate to the injector module, whereby a defined amount of injectate may be fed to the injector module and may be injected into the food product. The amount of injectate injected into the food product may be set or varied by different factors. One of these factors is the pressure with which the injectate is delivered by the feed pump unit to the injector module.

In a preferred embodiment of the inventive injection apparatus, the feed pump unit is a modular feed pump unit, removable arranged in the move-in space defined by the lower supporting frame assembly. Accordingly, the feed pump unit may be may be selected according to the food product to be treated and/or the kind and amount of injectate to be injected. Moreover, a feed pump unit already present in the injection apparatus may be exchanged by another feed pump unit, e.g. having other specification, or for maintenance or repair.

Furthermore, an injectate feeding pipe is provided for feeding injectate from the feed pump unit to the injector module. The injectate feeding pipe may be selected and arranged such that other components or units of the injector apparatus are not affected by the injectate feeding pipe, and that injectate, possibly leaking from the injectate feeding pipe, does not contaminate the food products to be treated.

In the following, further advantages and embodiments of the inventive devices are described in conjunction with the attached drawings. Thereby, the expressions "left", "right", "below" and "above" are referred to the drawings in an orientation of the drawings, which allows the normal reading of the reference numbers.

In the drawings:
- Fig. 1:: is a perspective view to the front side of an injection apparatus according to the present invention;
- Fig. 2:: is a perspective view to the injection apparatus of Fig. 1, in which housing elements of the injection apparatus has been omitted;
- Fig. 3:: is a perspective view to the rear side of the injection apparatus of Fig. 2, in which further components have been omitted; and
- Fig. 4:: shows a drive assembly and an injector module of the injection apparatus according to Figs. 1 to 3.

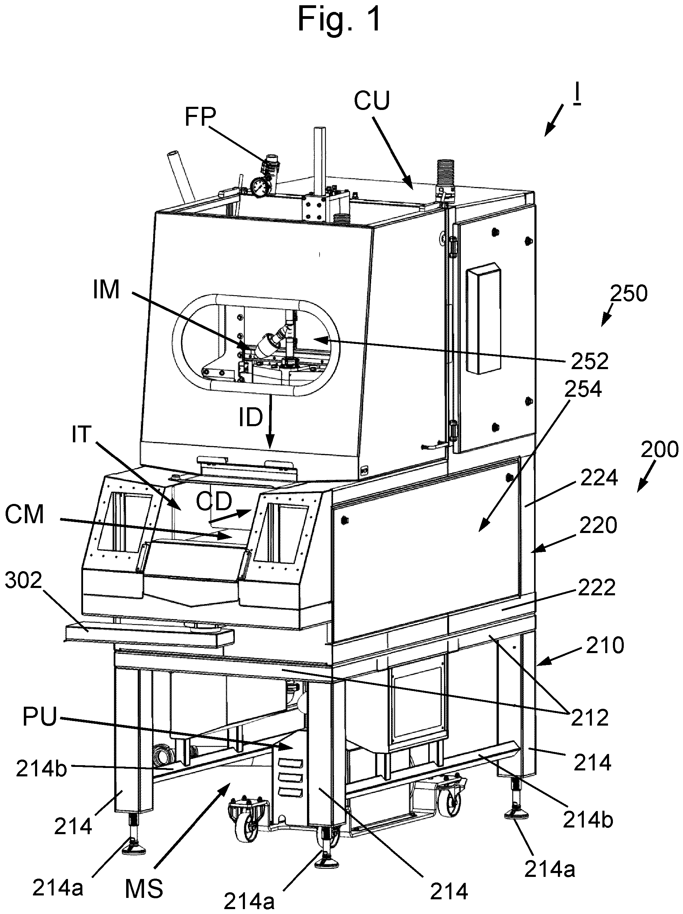

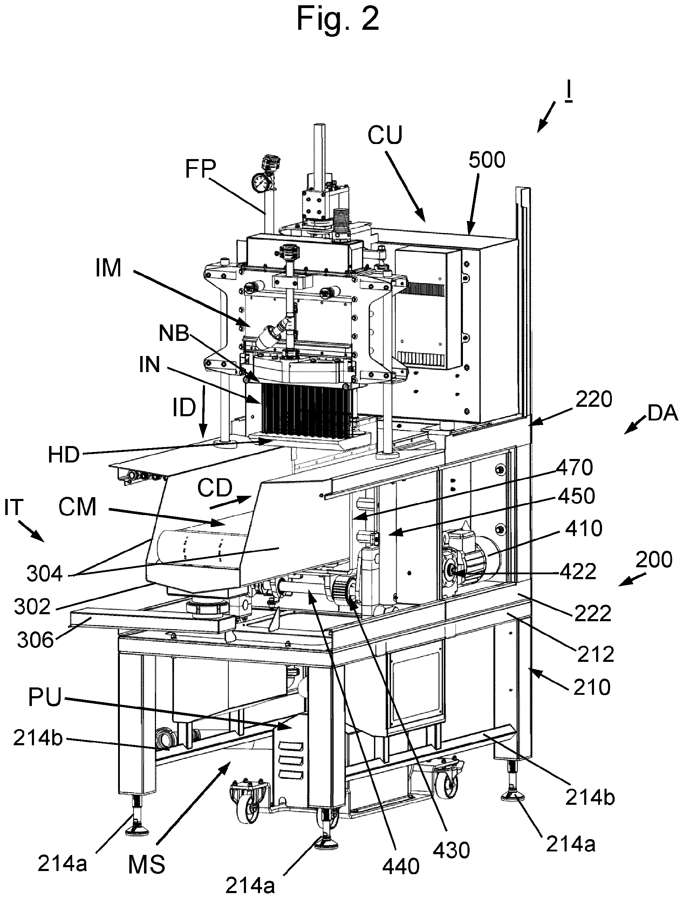

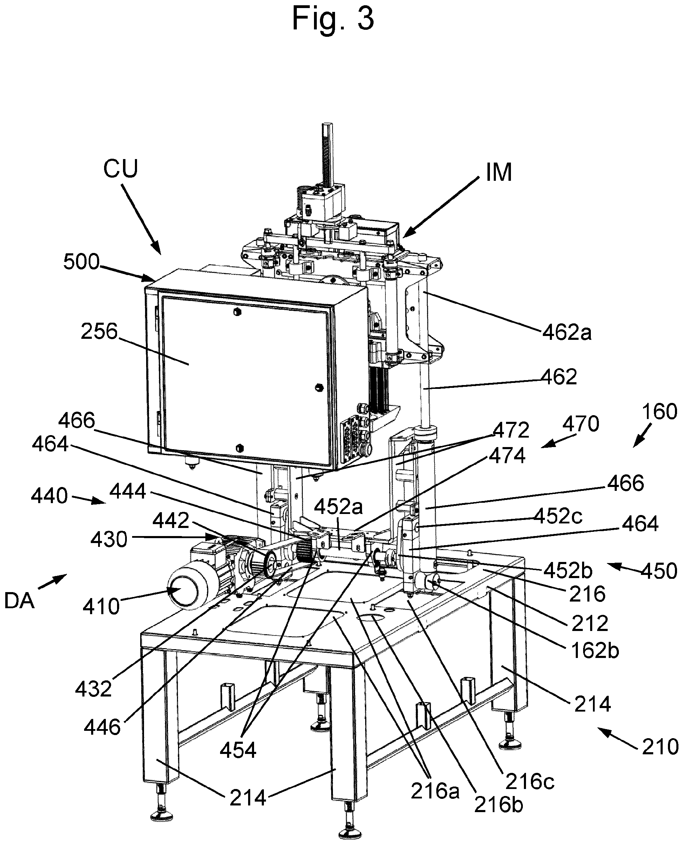

Fig. 1 shows an injection apparatus I according to the present invention. Injection apparatus I includes, inter alia, an injection tunnel IT, a conveyor module CM for conveying a food product to be treated through injection apparatus I, in particular through injection tunnel IT, in a conveying direction CD from the front side of injection apparatus I (cf. Figs. 1, 2) towards its rear side (cf. Fig. 3), an injector module IM for injecting an injectate into the food product conveyed by conveyor module CM, which is arranged vertically above conveyor module CM, and a drive assembly DA (cf. Fig. 2) for reversibly driving injector module IM vertically in an injection direction ID. Furthermore, a control unit CU is provided for controlling the operation of injection apparatus I and other components, such as, e.g., a feed pump unit PU.

Conveying direction CD extends at least approximately horizontal, while injection direction ID runs at least approximately vertical. Thus, injection direction ID extends at least approximately perpendicular to conveying direction CD.

Injection apparatus I further comprises a supporting frame 200, which is formed by a lower supporting frame assembly 210 and an upper supporting frame assembly 220. Lower supporting frame assembly 210 is used to hold and mount upper supporting frame assembly 220. Upper supporting frame assembly 220 is provided for holding and mounting conveyor module CM, drive assembly DA, injection tunnel IT and injector module IM. Moreover, upper supporting frame assembly 220 can be reversibly placed on lower supporting frame assembly 210 and likewise reversibly fixed there.

Lower supporting frame assembly 210 comprises at least approximately horizontally arranged lower horizontal frame elements 212 defining an at least approximately rectangular upper frame plane onto which upper supporting frame assembly 220 can be reversibly placed. From the corners of upper frame plane of lower supporting frame assembly 210, four posts 214 extend approximately vertically downwardly. Posts 214 can be provided with adjustable foot elements 214a at their lower ends.

Between vertical posts 214, two at least approximately horizontally aligned horizontal support members 214b extend along each of the two longitudinal sides of the upper frame plane, which serve to mount reversibly further components of injection apparatus I, like a filter or cleaner unit for filtering or cleaning the injectate. In addition, horizontal support members 241b also stiffen lower supporting frame assembly 210.

Upper horizontal support elements 212 form, together with vertical posts 214 and horizontal support members 214b, a move-in space MS. Move-in space MS serves to receive a movable feed pump unit PU, as also described below.

A sheet or plate 216, preferably made of metal and located in the upper frame plane, is mounted on the top of lower horizontal frame elements 212 (cf. Fig. 3). The length and width dimensions of metal sheet 216 are at least approximately the same as the length and width dimensions of the upper frame plane. A plurality of openings 216a to 216c are provided in metal sheet 216 to allow passage of components from upper supporting frame assembly 220 to lower supporting frame assembly 210, and vice versa, as will be discussed in further detail below. Additional openings and/or openings 216a to 216c may also be provided to reduce the overall weight of injection apparatus I.

Upper supporting frame assembly 220 comprises, amongst others, at least approximately horizontally arranged upper horizontal frame elements 222, which define a lower frame plane. The lower frame plane corresponds at least approximately substantially in its longitudinal and width dimensions to the upper frame plane defined by lower supporting frame assembly 210. Frame members 224, oriented at least approximately vertically, extend upwardly from upper horizontal frame elements 222. Vertical frame elements 224 of upper supporting frame assembly 220 are adapted to be used for reversibly mounting components of the injection apparatus I, as will be described in further detail below.

Frame elements 212, 214, 222, 224 and support members 214b preferably have a square cross-section, but may have any other cross-sectional shape. Further, frame elements 212, 214, 222, 224 and support members 214b are made of stainless steel.

Upper supporting frame assembly 220 is provided with a housing assembly 250 consisting of sheet metal panels made of stainless steel, for, amongst others, receiving and fluid tight covering for control unit CU, drive assembly DA and injector module IM. A window 252 is provided at the front of housing assembly 250, i.e., at the side facing opposite to conveying direction CD, in order to be able to monitor at least the proper functioning of injector module IM by an operator. Access doors 254, 256 are provided at housing assembly 250 for access to spaces for accommodating the individual assemblies and components received by housing assembly 250. If necessary, additional access doors may be provided in housing assembly 250. Access doors 254, 256 are lockable and fluid tight to the spaces therein behind.

As mentioned above, injection apparatus I further comprises an injection tunnel IT. Injection tunnel IT has an approximately U-shaped cross section, with the open side of the "U" facing upwardly. Injection tunnel IT extends from the front side of injection apparatus I shown in Fig. 1 to its rear side depicted in Fig. 3, with housing assembly 250 omitted in Fig. 3.

Injection tunnel IT has a nearly flat bottom 302 and approximately vertically extending side walls 304 (cf. Fig. 2) all made of stainless steel. In the region of the front end of injection tunnel IT and below bottom 302, a fluid outlet 306 is arranged, for allowing excess injectate escaping from the food product to be treated, to flow out of injection tunnel IT, e.g. into a collecting tank, for being processed for further use.

Bottom 302 is configured to allow the excess injectate to flow in the direction of fluid outlet 306. For this purpose, bottom 302 has a slight V-shaped cross section (cf. Figs. 1, 2) and is provided with a slope in the direction of fluid outlet 306.

Conveyor module CM is horizontally arranged in injection tunnel IT, and supported by bottom 302. Moreover, conveyor module CM is removably arranged in injection tunnel IT. This facilitates cleaning and maintenance of both conveyor module CM and injection tunnel IT.

Furthermore, injection apparatus I comprises feed pump unit PU for feeding injectate to injector module IM. Feed pump unit PU provided with wheels (not designated) is removably arranged in move-in space MS defined by lower supporting frame assembly 210. Feed pump unit PU is connected via an injectate feeding pipe FP to injector module IM (cf. Figs. 1, 2), for feeding injectate from feed pump unit PU to injector module IM.

As can be seen in Fig. 2, drive assembly DA is arranged in the bottom region of upper supporting frame assembly 220 and releasably fixed thereto. Drive assembly DA includes a single drive device 410 arranged laterally to injection tunnel IT. Further, drive assembly DA comprises a transmission unit 420 for transmitting torque from single drive device 410 to injector module IM. According to the embodiment of injection apparatus I shown in Figs. 1 to 4, single drive device 410, for illustration purposes only, is realized by an electric motor. It has to be noted that single drive device 410 may be realized by other motors, preferably by a servo motor. A servo motor, compared with a common electric motor, like an asynchronous motor, need less space and enables a reduction of energy consumption.

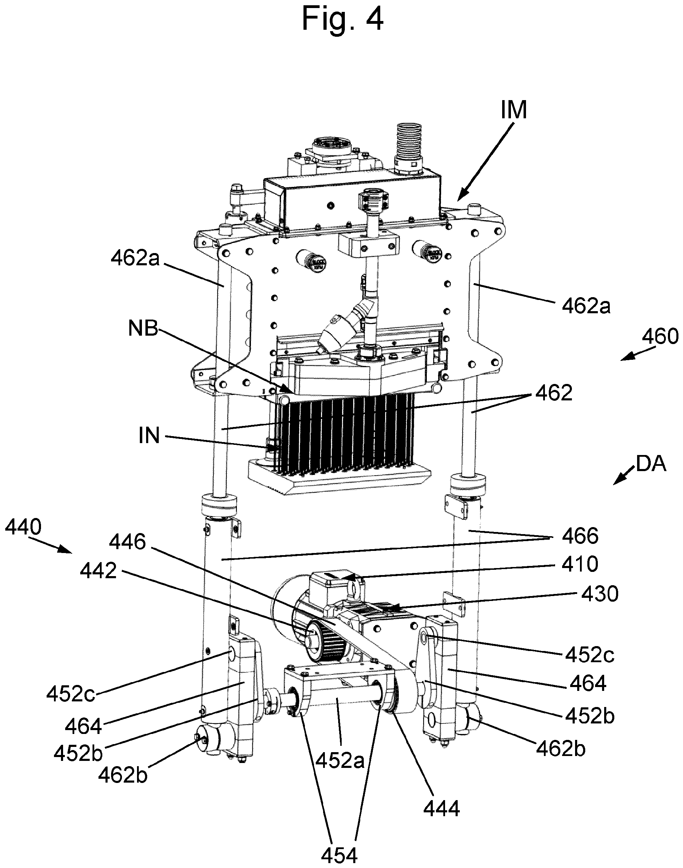

Transmission unit 420 includes a gear unit 430 directly coupled to single drive device motor 410, a belt drive 440, a crank drive 450 and a linear guide assembly 460. Design and function of transmission unit 420 will be explained in detail in conjunction with Figs. 3 and 4.

A U-shaped bracket assembly 470 (cf. Fig. 3) made of stainless steel is provided, which supports injection tunnel IT and crank drive 440. U-shaped bracket assembly 470 is mounted to upper supporting frame assembly 220, and ensures a fixed positional relationship between crank drive 440 and linear guide assembly 460, which is also coupled to U-shaped bracket assembly 470.

U-shaped bracket assembly 470 has two vertically extending arms 472 to which side walls 304 of injection tunnel IT mounted, and a horizontal bottom section 474, which supports bottom 302 of injection tunnel IT.

Furthermore, above the rear end of injection tunnel IT, i.e. the end facing in the conveying direction CD, and at the rear side of injector module IM, control unit CU is arranged in a fluid tight cuboid control cabinet 500 made of stainless steel plates. Control cabinet 500 accommodates further electric and electronic components, e.g. connecting terminals, an emergency stop switch and the like. Control cabinet 500 together with the electric and electronic components, is thereby arranged outside the wet area or splash zone of injection apparatus I, such that contact with the injectate, and thus, possible malfunction or disruption is omitted.

As can be seen in Fig. 2, injector module IM includes a plurality of injection needles IN, arranged in a needle bridge NB and extending vertically downwardly from injector module IM towards injection tunnel IT, and a hold-down device HD. Hold-down deice HD is reversibly vertically movable towards conveyor module CM and relative to needle bridge NB, for holding down a food product to be processed on conveyor module CM during the injection operation, and for releasing the food product after being processed.

As further can be seen in Fig. 2, injection tunnel IT with conveyor module CM, drive assembly DA with single drive device 410 and transmission unit 420, injector module IM and control cabinet 500 accommodating control unit CU are mounted to and supported by upper supporting frame assembly 220, whereas feed pump unit PU is removable arranged in move-in space MS defined by lower supporting frame assembly 210.

As already mentioned above, lower and upper supporting frame assemblies 210, 220 of supporting frame 200 are designed such that upper supporting frame assembly 220 may be separated reversibly from lower supporting frame assembly 210. Together with upper supporting frame 220 also all components supported by upper supporting frame 220 may be separated reversibly from lower supporting frame assembly 210. Injection apparatus I may thereby be disassembled into two units or assemblies, i.e. lower and upper supporting frame assemblies 210, 220 without cutting or severing cables, lines or mechanical assemblies, which facilitates transport and setup of injection apparatus I, e.g. when setting up injection apparatus I in rooms having small access abilities.

Fig. 3 is a perspective view to the rear side of injection apparatus I of Fig. 2. In Fig. 3, some of the components of injection apparatus I, particularly, control unit CU, drive assembly DA and injector module IM are shown, whereas injection tunnel IT with conveyor module CM and upper supporting frame assembly 220 have been left.

As also already mentioned above, drive assembly DA includes single drive device 410, to which gear unit 430 is mounted. Gear unit 430 has an output shaft 432, which extends horizontally and laterally from gear unit 430 in a direction towards injection tunnel IT, i.e. perpendicular to conveying direction CD.

As particularly can be seen in Fig. 4, which shows drive assembly DA and injector module IM of injection apparatus I, crank drive 450 includes a crankshaft 452 with a straight and horizontally extending central portion 452a. Central portion 452a of crankshaft 452 is arranged below injection tunnel IT. Further, crank drive 450 comprises two vertically extending crank arms 452b arranged at the ends of central portion 452a. Crank arms 452b are located laterally to injection tunnel IT. At the free ends of crank arms 452b, eccentric pins 452c are provided, which extend parallel to central portion 452a from the side of crank arms 452b that face away from central portion 452a.

Crankshaft 452 is rotatable supported by two bearing blocks 454, which are mounted on the lower side of bottom section 474 of U-shaped bracket assembly 460 (cf. Fig. 3) and thus, below injection tunnel 300. This means that debris or wear from bearing blocks 454 do not contaminate the food products. Moreover, crankshaft 452 and bearing blocks 454 are also accessible via access door 254 from the outside of the injection apparatus I for maintenance and/or cleaning work.

All elements of crank drive 450, if fabricated from metal, are made of stainless steel.

Belt drive 440 connects gear unit 430 to crank drive 450, and includes a first pulley 442, a second pulley 444 and a drive belt 446. First pulley 442 is arranged on output shaft 432 of gear unit 430. Second pulley is arranged on straight portion 452a of crankshaft 452 of crank drive 450. Drive belt 446, which in the shown embodiment is a flat, toothed belt, is wound about first and second pulleys 442, 444, which are respective toothed belt discs or rollers.

Linear guide assembly 460, which is also part of transmission unit 420 and made of stainless steel, includes two vertical push rods 462 having upper ends 462a and lower end 462b. To upper ends 462a of push rods 462, injector module IM is mounted. Lower ends 462b of push rods 462 are connected via linear connecting rods 464 to eccentric pins 452c of crankshaft 452.

Push rods 462 are guided in linear guidances 466, which are mounted to vertically extending arms 472 of U-shaped bracket assembly 470. In the present embodiment, linear guidances 466 are realized in the form of linear ball guides.

As can be seen in Fig. 3, lower supporting frame assembly 210 includes metal sheet 216 forming the upper surface of lower supporting frame assembly 210. Metal sheet 216 partially covers the upper end of lower supporting frame assembly 210, and has openings 216a, 216b, 216c, which allow not only the passage of components from lower supporting frame assembly 210 to upper supporting frame assembly 220, and vice versa, but also allow leaking injectate to drop off injection apparatus I, such that a leakage may rapidly be detected, and accumulations of injectate hidden inside injection apparatus I are omitted.

During operation of injection apparatus I, a food product to be processed, like pieces of meat, fish, poultry or dairy products, is conveyed through injection apparatus I in conveying direction CD by conveyor module CM. Conveyor module CM conveys said food product below injector module IM that is in a raised position. Then, injector module IM is lowered, and hold-down device HD is moved downwards until it rests on the food product. Thereafter, needle bridge NB is moved downwards, whereby injector needles IN extending through hold-down device HD pierce into the food product about a predefined depth. In this position, the injectate, like brine, fed by feed pump unit PU via injectate feed pipe FP to injector module IM, is injected into the food product. After a defined amount of injectate has been injected into the food product, needle bridge NB is lifted up such that injector needles IN disengage the food product. Hold-down device HD, which rests on the food product, prevents said food product from being raised by injector needles IN when being lifted up. Subsequently, hold-down device HD is raised, and the food product is released and conveyed by conveyor module CM in conveying direction CD out of injection apparatus I.

For reversibly, vertically moving injector module IM, single drive device 410 is activated. Torque is transmitted via gear unit 430, in which the speed of single drive device 410 is adapted to a selected speed, and further via belt drive 440 to crank drive 450. Crank drive 450 converts the rotational movement of crankshaft 452 via crank arms 452b and connecting rods 464 into a reversible, vertical, linear movement of push rods 462 guided in linear guidances 466 of linear guide assembly 460. Together with push rods 462, injector module IM is reversibly moved up and down for executing an injection operation.

As explained in conjunction with Figs. 2 to 4, single drive device 410, belt drive 440, crank drive 450 and linear guide assembly 460 are in fixed positional relationship to each other. Single drive device 410 is mounted to upper supporting frame assembly 220. Crankshaft 452 of crank drive 450 and linear guidances 466 of linear guide assembly 460 are mounted to U-shaped bracket assembly 470 that is fixed to upper supporting frame assembly 220.

During processing food products in injection apparatus I, heat may be generated by single drive device 410 and/or by transmission unit 420. Said heat may not affect the food product just processed or the injectate, particularly excess injectate escaping from the food product or from injector module IM and being collected in injection tunnel IT. Since drive assembly DA is arranged laterally to injection tunnel IT, ascending heat is guided through upper supporting frame assembly 220 and housing assembly 250 away from the food product conveyed on conveyor module CM, and also away from the injectate collected in injection tunnel IT. For guiding heat generated during the injection operation by the components of injection apparatus I, housing assembly 250 has an at least partially open top side.

Furthermore, the specific arrangement of drive assembly DA allows an easier access to the components of drive assembly DA via access door 254. By access door 254, components or elements of drive assembly DA, which is arranged in an ergonomic working height, may easily be removed from injection apparatus I, or may be maintained without being removed.

Feed pump unit PU, shown in Figs. 1 and 2, is removably arranged in move-in space MS defined by lower supporting frame assembly 210, and is provided with respective wheels. For adapting injection apparatus I to a specific food product, a specific injectate or to specific operation conditions, feed pump unit PU may be exchanged by another feed pump unit. The modular and moveable design of feed pump unit PU allows an exchange without disassembling other components or elements from injection apparatus I.

Via control unit CU, it is also possible to adapt operating parameters, like the speed of single drive device 410 and/or conveyor module CM, and/or the amount of injectate fed by feed pump unit PU, to a desired process or a specific food product.

As explained above, lower supporting frame assembly 210 includes a metal sheet 216 forming the upper surface of lower supporting frame 210. Metal sheet 216 has openings 216a, 216b, 216c, which allow leaking injectate to drop off injection apparatus I, such that a leakage may rapidly be detected, and accumulations of injectate hidden inside injection apparatus I are omitted. However, said openings 216a, 216b, 216c may also be used for guiding injectate feed pipe FP from feed pump unit FP via, e.g., opening 216b to injector module IM. Moreover, openings 216c are provided for allowing lower ends 462b of pushrods 462 to immerse into lower supporting frame assembly 210 during downward movement of injector module IM. Additionally, one or more of said openings 216a, 216b, 216c also provide access to components of injection apparatus I, which are arranged in lower supporting frame assembly 210, e.g. for maintenance or repair. Further additionally, said openings 216a, 216b, 216c may also be covered by respective metal sheets, e.g. for preventing unintended reaching into movable parts of injector apparatus I.

As already mentioned above, between lower supporting frame assembly 210 and upper supporting frame assembly 220, a dividing plane is defined by the upper and lower frame plane, along which injection apparatus I may be disassembled into two units or assemblies without cutting or severing cables, lines or mechanical assemblies. It has to be understood that respective mounting means, like bolts and screws are provided for detachably connecting lower supporting frame assembly 210 and upper supporting frame assembly 220 to each other. Moreover, alignment elements, like alignment pins that engage into respective alignment holes, may be provided for aligning lower supporting frame assembly 210 and upper supporting frame assembly 220 to each other.

Drive assembly DA according to the embodiment of injection apparatus I shown in Figs 1 to 4 includes belt drive 440 for connecting gear unit 430 to crank drive 450, and which includes first and second pulleys 442, 444 and drive belt 446. It is also possible that drive assembly DA includes an alternative drive for connecting gear unit 430 to crank drive 450. Said alternative drive may include a V-belt and respective V-belt discs, a cardan or shaft drive or any other suitable drive.

It has further to be understood that linear guidances 466 may also be realized by other than linear ball guides, like slide rails.

### Reference signs

- I: injection apparatus
- CM: conveyor module
- CD: conveying direction
- CU: control unit
- DA: drive assembly
- FP: injectate feed pipe
- HD: hold-down device
- ID: injection direction
- IM: injector module
- IN: injection needles
- IT: injection tunnel
- MS: move-in space
- NB: needle bridge
- PU: feed pump unit
- 200: supporting frame
- 210: lower supporting frame
- 212: frame elements
- 214: posts
- 214a: adjustable foot element
- 214b: horizontal support member
- 216: metal sheet
- 216a - 216c: openings
- 220: upper supporting frame
- 250: housing assembly
- 252: window
- 254: access door
- 256: access door
- 302: bottom of injection tunnel
- 304: side walls of injection tunnel
- 306: fluid outlet of injection tunnel
- 410: single drive device
- 420: transmission unit
- 430: gear unit
- 432: output shaft
- 440: belt drivel 42
- 442: first pulley
- 444: second pulley
- 446: drive belt
- 450: crank drive
- 452: crankshaft
- 452a: straight portion
- 452b: crank arms
- 452c: eccentric pins
- 460: linear guide assembly
- 462: push rods
- 462a: upper ends
- 462b: lower ends
- 464: connecting rods
- 466: linear guidances
- 470: bracket assembly
- 472: arms
- 474: bottom section
- 500: control cabinet

## Claims

1. An injection apparatus (I) for injecting an injectate, like brine, into a food product, comprising:
- an injection tunnel (IT),
- a conveyor module (CM) for conveying the food product to be treated through the injection tunnel (IT) in a conveying direction (CD), wherein the conveyor module (CM) is at least approximately horizontally arranged in the injection tunnel (IT),
- an injector module (IM) for injecting the injectate into the food product, wherein the injector module (IM) is arranged above the conveyor module (CM), and
- a drive assembly (DA) for reversibly driving the injector module (IM) in vertical direction,
wherein the drive assembly (DA) includes a single drive device (410) arranged laterally to the injection tunnel (IT).

2. The injection apparatus (I) according to claim 1,
wherein the drive assembly (DA) comprises a transmission unit (420) for transmitting torque from the single drive device (410) at least to the injector module (IM) wherein, preferably, the components of the transmission unit (420) are arranged laterally and below the injection tunnel (IT).

3. The injection apparatus (I) according to claim 2,
wherein the transmission unit (420) includes two vertically arranged push rods (462) provided laterally to the injection tunnel (IT) and guided in vertical guidances (466), for reversibly vertically driving the injector module (IM), wherein, preferably, the transmission unit (420) includes a crankshaft (452) arranged below the injection tunnel (IT) and having two eccentric pins (452c) coupled to the lower ends (462b) of the push rods (462).

4. The injection apparatus (I) according to claim 2 or 3,
wherein the transmission unit (420) includes a gear unit (430) having an input shaft coupled to the single drive device (410), and an output shaft (432) extending laterally from the gear unit (430) and being coupled to the crankshaft (152).

5. The injection apparatus (I) according to any one of claims 1 to 4,
further including a control unit (CU), preferably accommodated in a control cabinet (500), and being arranged above the conveyor module (CM).

6. The injection apparatus (I) according to claim 5 when dependent on claims 3 or 4,
wherein the push rods (462) are hollow tubes, for guiding power and control lines from the control unit (CU) to the single drive assembly (DA).

7. The injection apparatus (I) according to any one of claims 1 to 6,
further comprising a supporting frame (200) having a lower supporting frame assembly (210) and an upper supporting frame assembly (220) being located above the lower supporting frame assembly (210).

8. The injection apparatus (I) according to claim 7,
wherein an access door (254) is provided in the upper supporting frame (220) for providing access at least to the drive assembly (DA).

9. The injection apparatus (I) according to claim 7 or 8,
wherein the lower supporting frame assembly (210) and the upper supporting frame assembly (220) are adapted to be separated reversibly from each other.

10. The injection apparatus (I) according to any one of claims 7 to 9,
wherein at least one approximately U-shaped bracket assembly (470) is arranged in the upper supporting frame assembly (220), for supporting at least the injection tunnel (IT).

11. The injection apparatus (I) according to any one of claims 7 to 10,
wherein the topside of the lower supporting frame assembly (210) is an at least approximately closed surface, or wherein the topside of the lower supporting frame assembly (210) is provided with openings (216a - 216c).

12. The injection apparatus (I) according to any one of claims 7 to 11,
wherein the lower supporting frame assembly (210) defines a move-in space (MS).

13. The injection apparatus (I) according to any one of claims 1 to 12,
further comprising a feed pump unit (PU) for feeding injectate to the injector module (IM).

14. The injection apparatus (I) according to claim 13 when dependent on claim 12,
wherein the feed pump unit (PU) is a modular feed pump unit (PU), removably arranged in the move-in space (MS) defined by the lower supporting frame assembly (210).

15. The injection apparatus (I) according to claim 13 or 14,
wherein an injectate feeding pipe (FP) is provided for feeding injectate from the feed pump unit (PU) to the injector module (IM).
